# EUROPEAN PATENT APPLICATION

(11) **EP 3 878 681 A1**
(43) Date of publication of application: **15.09.2021**
(21) Application number: 19882664.6
(22) Date of filing: 05.09.2019
(51) Int. Cl.: B60L 5/30, B60L 53/35

(54) **CURRENT COLLECTOR**

(30) Priority: 06.11.2018 CN 201811310518
(71) Applicant: CRRC Zhuzhou Locomotive Co., Ltd, Zhuzhou, Hunan 412001 (CN)
(72) Inventor: FENG, Ye, Zhuzhou, Hunan 412001 (CN); CHEN, Zhenbao, Zhuzhou, Hunan 412001 (CN); LIN, Ping, Zhuzhou, Hunan 412001 (CN); CHEN, Mingguo, Zhuzhou, Hunan 412001 (CN); MO, Wenfang, Zhuzhou, Hunan 412001 (CN); PENG, Baolin, Zhuzhou, Hunan 412001 (CN)
(74) Representative: Ran, Handong
(86) International application number: PCT/CN2019/104509
(87) International publication number: WO 2020/093775

(57) **Abstract**

A current collector, comprising a base (1) and a pantograph head (5). First vertical rods (5.1) are provided at the bottom part of the pantograph head (5). Second vertical rods (1.1) are provided on the base (1). Large tension springs (9.2) are fixedly connected at one end to the base (1). A push-pull rod (9.1) and the other end of the large tension springs (9.2) are pivotally connected to one end of an L-shaped lower arm (2). A Z-shaped transitional base (3) is pivotally connected at one end to the midsection of an L-shaped upper arm (6). The Z-shaped transitional base (3) is pivotally connected at the other end to the other end of the L-shaped lower arm (2). Small tension springs (8) are fixedly connected at one end to the Z-shaped transitional base (3). The small tension springs (8) are pivotally connected at the other end to one end of a transitional rod (12). Balancing rods (4) are pivotally connected at one end to the midsection of the Z-shaped transitional base (3). The balancing rods (4) are pivotally connected at the other end to the bottom end of the first vertical rods (5.1). The L-shaped upper arm (6) is pivotally connected at one end to the top end of the first vertical rods (5.1). The current collector has a small vertical mounting size on a vehicle, has a large pantograph raising height in the height direction, and can be electrically and/or manually raised and dropped.

## Description

### TECHNICAL FIELD

The present invention relates to a current collector.

### BACKGROUND

With the development of society, the concepts of urban rail transit development such as energy conservation and environmental protection have been continuously improved, and energy storage type trams have emerged. The so-called energy storage type trams refer to using energy storage elements to store electrical energy for traction. A tram obtains current by means of the contact between a current collector mounted at its roof and a contact rail, and therefore, it has the advantage of environmental protection. Just because of this characteristic, the trams have been more and more popularized and used.

The current collector for the energy storage type tram, after being raised to a certain height, is in contact with the charged contact rail above the tram, so as to obtain electric energy for the tram and provide kinetic energy to the tram.

The existing current collectors for energy storage type trams adapt to a conventional height 3900 of contact rails. When the height of the contact rail is increased to 4500, the pantograph raising height of the current collector increases a lot. In order to save the mounting space of the roof, it is required to develop a current collector with a small mounting size in the longitudinal direction and a sufficient pantograph raising height in the vertical direction of a tram. In addition, the current collector should have the function of manually raising and lowering the pantograph in the passenger compartment when the tram is power-off.

### SUMMARY

Aiming at the above shortcomings of the prior art, the objective of the present invention is to provide a current collector, which occupy a small mounting space in the longitudinal direction of a tram, has a large pantograph raising height in the height direction, and can be electrically and/or manually raised and lowered.

In order to solve the above technical problems, the technical solution adopted by the present invention is as follows:
A current collector, including a base and a pantograph head, wherein a first vertical rod is arranged at a bottom of the pantograph head, a second vertical rod is arranged on the base, and a big tension spring and a push-pull rod are further horizontally arranged on the base.

The current collector further includes a transition rod, an L-shaped lower arm, a pull rod, a Z-shaped transition base, a balance rod, an L-shaped upper arm, a small tension spring, and a driving mechanism for driving the push-pull rod to move;

One end of the big tension spring is fixedly connected to the base, the push-pull rod and the other end of the big tension spring are hinged to one end of the L-shaped lower arm at point A, a bending point of the L-shaped lower arm is hinged to a middle section of the second vertical rod at point B, a top end of the second vertical rod is hinged to one end of the pull rod at point C, one end of the Z-shaped transition base is hinged to a middle section of the L-shaped upper arm at point D, the other end of the Z-shaped transition base is hinged to the other end of the L-shaped lower arm at point E, the other end of the pull rod is hinged to a middle section of the L-shaped lower arm at point F, one end of the small tension spring is fixedly connected to the Z-shaped transition base, the other end of the small tension spring is hinged to one end of the transition rod at point H, and the other end of the transition rod is hinged to the middle section of the L-shaped upper arm at point D; one end of the balance rod is hinged to a middle section of the Z-shaped transition base at point K, the other end of the balance rod is hinged to a bottom end of the first vertical rod at point I, one end of the L-shaped upper arm is hinged to a top end of the first vertical rod at point J, and the other end of the L-shaped upper arm is suspended in the air,

Points B, C, F, and E form a parallelogram BCFE, and points D, K, I, and J form a parallelogram DKIJ.

As a preferred manner, the driving mechanism includes an electric push rod in which a rotating motor is arranged, an output shaft of the rotating motor is connected to the push-pull rod in a transmission manner through a sliding block, and the base is provided with a guide rail for guiding the sliding block.

Further, the driving mechanism further includes a flexible shaft, one end of the flexible shaft extends to a passenger compartment, and the other end of the flexible shaft is connected to the sliding block in a transmission manner through the electric push rod.

As a preferred manner, the flexible shaft includes a shaft core and a steel wire tube sleeved on the shaft core.

Compared with the prior art, the present invention has the following advantages:
First, the current collector has a special multi-link rod mechanism, and has the advantages of short mounting size in the longitudinal direction of a tram and large pantograph raising height in the height direction of the tram.
Second, an electric push rod mechanism with a guide rail is configured to reduces the amount of forces applied to the electric push rod and ensure the reliability of the electric push rod under long-term extension and retraction conditions; at the same time, the spring with extension and retraction characteristics also provides a pantograph raising force, which reduces the load force requirement of the electric push rod and prolongs the service life of the electric push rod.
Third, the electric push rod is connected to the manual operated flexible shaft, the flexible shaft extends a certain length from the interface for manual operation of the electric push rod to the inside of the passenger compartment, and when the operator rotates the flexible shaft in the passenger compartment, the interface for manual operation of the electric push rod can be driven to rotate, thereby driving the electric push rod to extend and retract to achieve the purpose of raising and lowering the pantograph.

### BRIEF DESCRIPTION OF THE DRAWINGS

Fig. 1 is an exploded schematic diagram of rods of the present invention in principle.
Fig. 2 is a schematic diagram of rods when a pantograph head is at a first position after being raised.
Fig. 3 is a schematic diagram of rods when the pantograph head is raised to a halfway position between a first position and a second position.
Fig. 4 is a schematic diagram of rods when a pantograph head is at a second position after being dropped.
Fig. 5 is a schematic structural diagram of the present invention in a pantograph raising state.
Fig. 6 is a right view of Fig. 5.
Fig. 7 is a front view of Fig. 5.
Fig. 8 is a schematic structural diagram of the present invention in a pantograph lowering state.
Fig. 9 is a schematic structural diagram of the bottom of the present invention.
Fig. 10 is a schematic structural diagram of Fig. 9 after the big tension spring is removed.

In the figures, 1 - base, 1.1 - second vertical rod, 2 - lower arm, 3 - transition base, 4 - balance rod, 5 - pantograph head, 5.1 - first vertical rod, 6 - upper arm, 7 - pull rod, 8 - small tension spring, 9.1 - push-pull rod, 9.2 - big tension spring, 10.1 - electric push rod, 10.2 - sliding block, 10.3 - guide rail, 11.1 - steel wire tube, 11.2 - shaft core, 12 - transition rod.

### DETAILED DESCRIPTION OF THE EMBODIMENTS

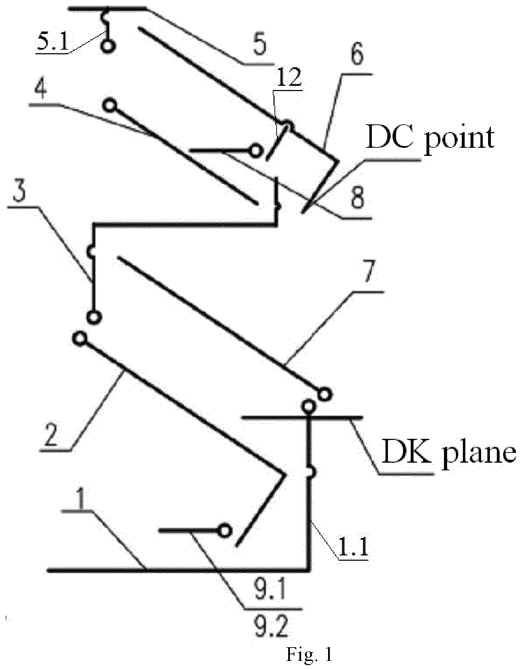

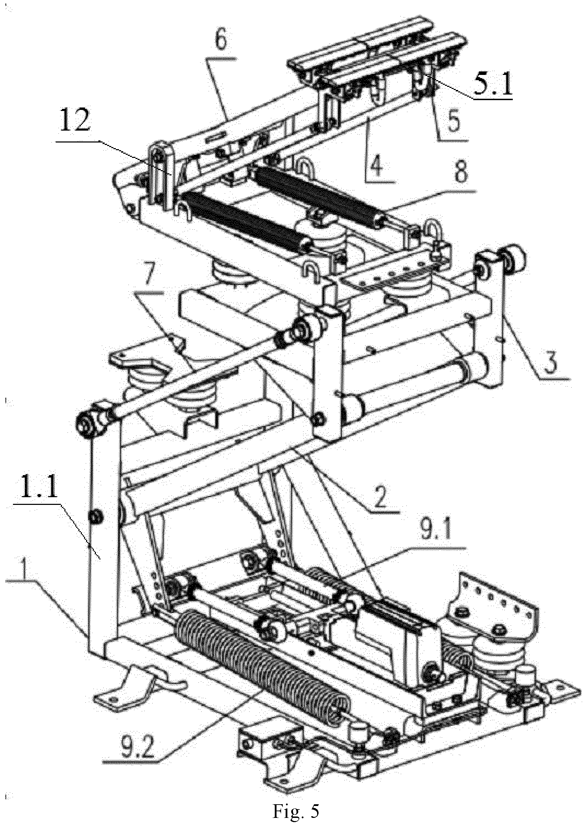

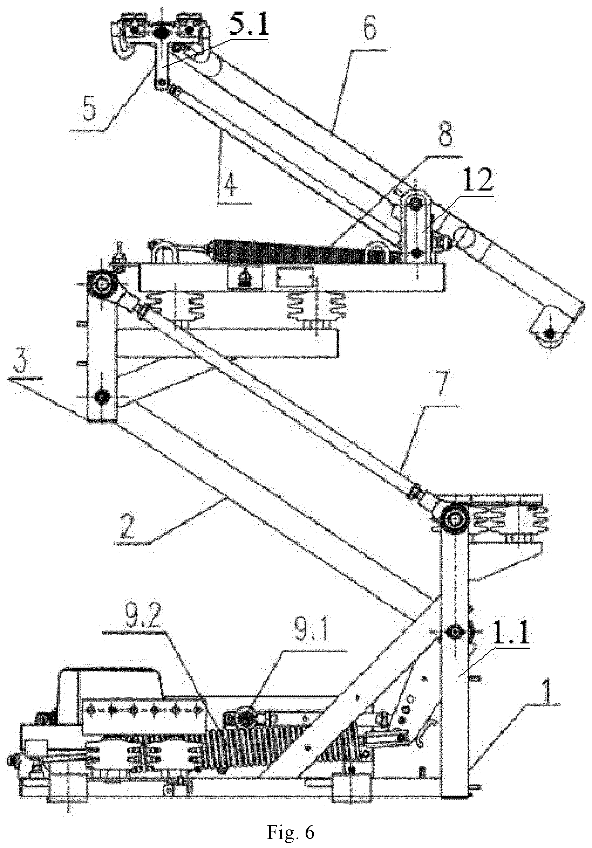

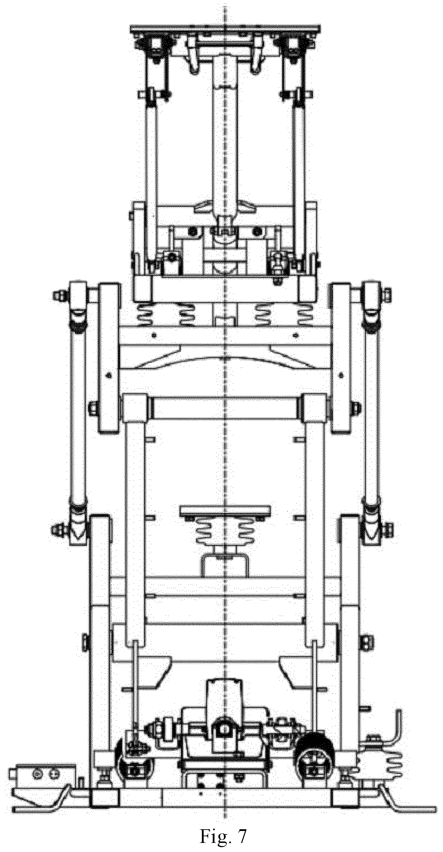

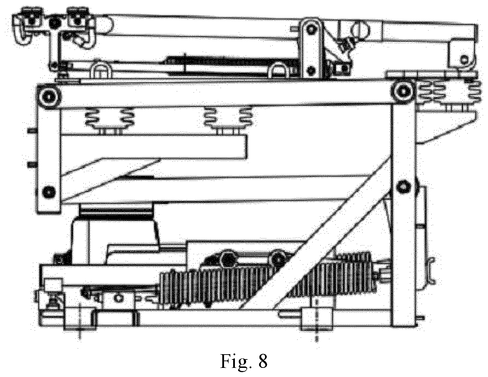

As shown in Figs. 1 to 10, an embodiment of the present invention includes a base 1 and a pantograph head 5, a first vertical rod 5.1 is arranged at a bottom of the pantograph head 5, a second vertical rod 1.1 is arranged on the base 1, and a big tension spring 9.2 and a push-pull rod 9.17 are further horizontally arranged on the base 1.

The present invention further includes a transition rod 12, an L-shaped lower arm 2, a pull rod 7, a Z-shaped transition base 3, a balance rod 4, an L-shaped upper arm 6, a small tension spring 88, and a driving mechanism for driving the push-pull rod 9.17 to move.

One end of the big tension spring 9.2 is fixedly connected to the base 1, the push-pull rod 9.17 and the other end of the big tension spring 9.2 are hinged to one end of the L-shaped lower arm 2 at point A, a bending point of the L-shaped lower arm 2 is hinged to a middle section of the second vertical rod 1.1 at point B, a top end of the second vertical rod 1.1 is hinged to one end of the pull rod 7 at point C, one end of the Z-shaped transition base 3 is hinged to a middle section of the L-shaped upper arm 6 at point D, the other end of the Z-shaped transition base 3 is hinged to the other end of the L-shaped lower arm 2 at point E, the other end of the pull rod 7 is hinged to a middle section of the L-shaped lower arm 2 at point F, one end of the small tension spring 8 is fixedly connected to the Z-shaped transition base 3, the other end of the small tension spring 8 is hinged to one end of the transition rod 12 at point H, and the other end of the transition rod 12 is hinged to the middle section of the L-shaped upper arm 6 at point D; one end of the balance rod 4 is hinged to a middle section of the Z-shaped transition base 3 at point K, the other end of the balance rod 4 is hinged to a bottom end of the first vertical rod 5.1 at point I, one end of the L-shaped upper arm 6 is hinged to a top end of the first vertical rod 5.1 at point J, and the other end of the L-shaped upper arm 6 is suspended in the air.

Points B, C, F, and E form a parallelogram BCFE, and points D, K, I, and J form a parallelogram DKIJ.

The driving mechanism includes an electric push rod 10.1 in which a rotating motor is arranged, an output shaft of the rotating motor is connected to the push-pull rod 9.17 in a transmission manner through a sliding block 10.2, and the base 1 is provided with a guide rail 10.3 for guiding the sliding block 10.2.

The driving mechanism further includes a flexible shaft, one end of the flexible shaft extends to a passenger compartment, and the other end of the flexible shaft is connected to the sliding block 10.2 in a transmission manner through the electric push rod 10.1. The flexible shaft includes a shaft core 11.2 and a steel wire tube 11.1 sleeved on the shaft core 11.2.

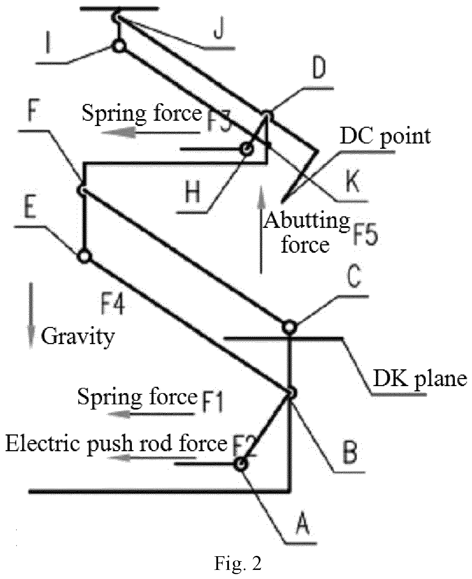

The principle of the mechanism of the present invention is as follows:
As shown in Figs. 1 and 2, the present invention is a multi-rod mechanism. Fig. 1 is an exploded view of the mechanism, and Fig. 2 is a hinged view of the mechanism. In Fig. 1, the reference number 1 is fixed and is a supporting component. Reference number 1 and reference number 2 are hinged at point B, reference number 1 and reference number 7 are hinged at point C, reference number 2 and reference number 3 are hinged at point E, reference number 3 and reference number 7 are hinged at point F, reference number 3 and reference number 6 are hinged at point D, reference number 3 and reference number 4 are hinged at point K, reference number 4 and reference number 5 are hinged at point I, reference number 5 and reference number 6 are hinged at point J, reference number 2 is hinged with reference number 9.1 and reference number 9.2 at point A, and reference number 6 and reference number 8 are hinged at point H.

The pantograph raising principle of the present invention is as follows:
As shown in the figures, reference number 9.2 is a cylindrical spring in a stretched state, which produces a leftward stretching force as shown in Fig. 2, the stretching force pulls reference number 2 to rotate clockwise about point B relative to reference number 1, and reference numbers 1, 2, 3, and 7 are hinged to form a parallelogram. When reference number 9.2 rotates clockwise under the action of spring force, the reference number 1 as a side of the parallelogram formed by reference numbers 1, 2, 3, and 7 does not move, and the reference number 3 as a side of the parallelogram moves vertically upward in parallel to the reference number 1 as a side of the parallelogram.

As shown in the figures, reference number 8 is a cylindrical spring in a stretched state, which produces a leftward stretching force as shown in Fig. 2, the stretching force pulls reference number 6 to rotate clockwise about point D relative to reference number 3, and reference numbers 3, 4, 5, and 6 are hinged to form a parallelogram. When reference number 6 rotates clockwise under the action of spring force, the reference number 3 as a side of the parallelogram formed by reference numbers 3, 4, 5 and 6 does not move, and the reference number 5 as a side of the parallelogram moves vertically upward in parallel to the reference number 3 as a side of the parallelogram. Therefore, the pantograph head 5 is in a normal raising state.

The pantograph lowering principle of the present invention is as follows:
As shown in Fig. 2, the pantograph is at a first position after being raised. When the pantograph needs to be lowered, the electric push-pull rod 9.1 moves to the right to produce an electric push rod force F2 to overcome the spring force F1. At this time, the hinged point A moves to the right to push reference number 2 to rotate counterclockwise about point B relative to reference number 1, and reference numbers 1, 2, 3, and 7 are hinged to form a parallelogram. When reference number 9.2 rotates counterclockwise under the action of the electric push rod, the reference number 1 as a side of the parallelogram formed by reference numbers 1, 2, 3, and 7 does not move, and the reference number 3 as a side of the parallelogram moves vertically downward in parallel to the reference number 1 as a side of the parallelogram.

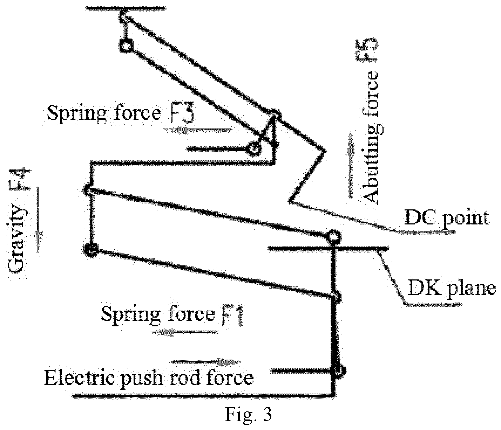

When reference number 3 continues to move down to the position shown in Fig. 3, the current collector has been lowered to a certain extent, and the distance between the DC point and the DK plane shown in Fig. 1 has decreased to the distance shown in Fig. 3. When reference number 3 continues to lower, and the distance between the DC point and the DK plane continues to decrease until the DC point abut against the DK plane.

When reference number 3 continues to lower, because the DC point is abutted by the DK plane, reference number 6 overcomes the spring force and rotates counterclockwise about point D relative to reference number 3, and reference numbers 3, 4, 5, and 6 are hinged to form a parallelogram. When the reference number 6 rotates counterclockwise under the abutting force of the DC point and the DK plane, the reference number 3 as a side of the parallelogram formed by reference numbers 3, 4, 5 and 6 does not move, and the reference number 5 as a side of the parallelogram moves vertically downward in parallel to the reference number 3 as a side of the parallelogram. Therefore, the pantograph head 5 is gradually lowered.

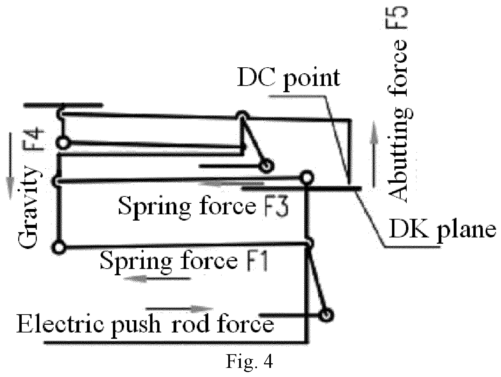

When the pantograph head is being dropped, reference number 3 continues to lower, and reference number 6 rotates counterclockwise about point D relative to reference number 3, because the DC point is abutted by the DK plane, as shown in Fig. 4.

Since the entire mechanism is composed of an upper parallelogram and a lower parallelogram, the pantograph raising height is high, which meets the line condition of the high tram cable height, and solves the technical problems of the entire tram.

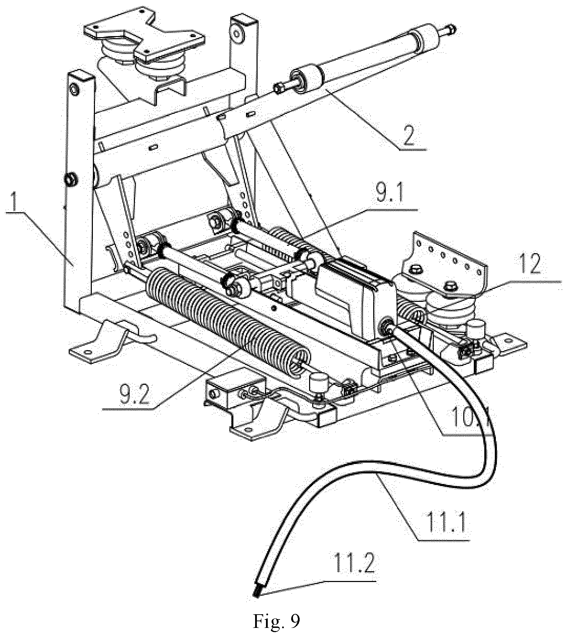

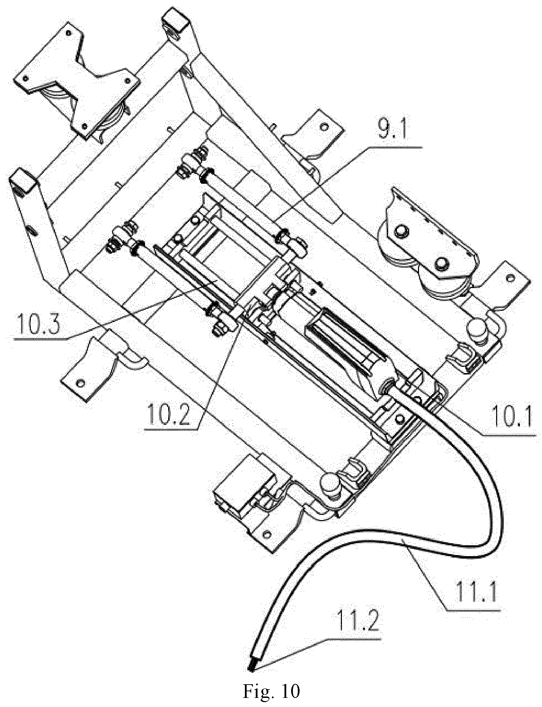

The driving principle of pantograph raising of the present invention is as follows:
As shown in Fig. 9 and Fig. 10, the spring 9.2 retracts to provide a pantograph raising force, and the electric push-pull rod 9.1 is pushed to overcome the spring force and provide a pantograph lowering force. reference number 10.3 is a guide rail fixed on the base 1, reference number 10.2 is a sliding block that can slide back and forth on reference number 10.3, reference number 10.1 is an electric push rod that can be extended and retracted by means of electronic control, and the electric push rod 10.1 is hinged with the sliding block 10.2. Therefore, the electric push rod 10.1 can push the sliding block 10.2 to slide back and forth on the guide rail 10.3 by means of electronic control. The sliding block 10.2 is hinged to one side of the electric push-pull rod 9.1, and the other side of the electric push-pull rod 9.1 is hinged to the lower arm 2. Therefore, the sliding block 10.2 can push the lower arm 2 by pushing the electric push-pull rod 9.1. The advantage of this structure is that the force on the electric push rod 10.1 is always a force perpendicular to the push rod. The electric push rod does not swing during the working process, which reduces the amount of forces applied the electric push rod, thereby prolonging the service life of the electric push rod.

The manual driving principle of the present invention is as follows:
The principle of the electric push rod 10.1 is that the motor in the electric push rod rotates to drive a lead screw to extend and retract, which converts the rotation of the motor into linear motion. The electric push rod 10.1 reserves an interface for manual operation which connects with the rotating shaft of the rotating motor inside the electric push rod, and the motor can be driven to rotate by rotating the interface for manual operation. The motor rotates to drive the lead screw to extend and retract, so as to achieve the purpose of controlling the extension and retraction of the electric push rod by rotating the interface for manual operation.

The outer ring of the flexible shaft 11 is a fixed flexible shaft steel wire tube 11.1, and the inner ring of the flexible shaft can be a shaft core 11.2 rotatable in the steel wire tube 11.1 of the flexible shaft. When the steel wire tube 11.1 of the flexible shaft is fixed, reference number 11.2 can rotate at a high speed in the steel wire tube 11.1 of the flexible shaft.

The principle of manually raising and lowering the pantograph is, as shown in Fig. 9 and Fig. 10, the steel wire tube 11.1 and the shaft core 11.2 of the flexible shaft are connected to the interface for manual operation of the electric push rod 10.1, and a certain length is extended here to the inside of the passenger compartment. When the shaft core 11.2 is operated to rotate, the interface for manual operation of the electric push rod 10.1 can be driven to rotate, thereby driving the electric push rod 10.1 to extend and retract to achieve the purpose of raising and lowering the pantograph. When the tram is power-off, the raising and lowering of the current collector can be controlled by rotating the shaft core 11.2 inside the tram.

The embodiments of the present invention are described above with reference to the drawings, but the present invention is not limited to the specific embodiments. The specific embodiments described above are merely illustrative but not restrictive. Many forms may also be made by those of ordinary skill in the art under the enlightenment of the present invention without departing from the purpose of the present invention and the scope of the claims, and these forms fall into the scope of the present invention.

## Claims

1. A current collector, comprising a base (1) and a pantograph head (5), wherein a first vertical rod (5.1) is arranged at a bottom of the pantograph head (5), a second vertical rod (1.1) is arranged on the base (1), a big tension spring (9.2) and a push-pull rod (9.1) (7) are further horizontally arranged on the base (1),
the current collector further comprises a transition rod (12), an L-shaped lower arm (2), a pull rod (7), a Z-shaped transition base (3), a balance rod (4), an L-shaped upper arm (6), a small tension spring (8) (8), and a driving mechanism for driving the push-pull rod (9.1) (7) to move;
one end of the big tension spring (9.2) is fixedly connected to the base (1), the push-pull rod (9.1) (7) and the other end of the big tension spring (9.2) are hinged to one end of the L-shaped lower arm (2) at point A, a bending point of the L-shaped lower arm (2) is hinged to a middle section of the second vertical rod (1.1) at point B, a top end of the second vertical rod (1.1) is hinged to one end of the pull rod (7) at point C, one end of the Z-shaped transition base (3) is hinged to a middle section of the L-shaped upper arm (6) at point D, the other end of the Z-shaped transition base (3) is hinged to the other end of the L-shaped lower arm (2) at point E, the other end of the pull rod (7) is hinged to a middle section of the L-shaped lower arm (2) at point F, one end of the small tension spring (8) is fixedly connected to the Z-shaped transition base (3), the other end of the small tension spring (8) is hinged to one end of the transition rod (12) at point H, and the other end of the transition rod (12) is hinged to the middle section of the L-shaped upper arm (6) at point D; one end of the balance rod (4) is hinged to a middle section of the Z-shaped transition base (3) at point K, the other end of the balance rod (4) is hinged to a bottom end of the first vertical rod (5.1) at point I, one end of the L-shaped upper arm (6) is hinged to a top end of the first vertical rod (5.1) at point J, and the other end of the L-shaped upper arm (6) is suspended in the air,
points B, C, F, and E form a parallelogram BCFE, and points D, K, I, and J form a parallelogram DKIJ.

2. The current collector according to claim 1, wherein the driving mechanism comprises an electric push rod (10.1) in which a rotating motor is arranged, an output shaft of the rotating motor is connected to the push-pull rod (9.1) (7) in a transmission manner through a sliding block (10.2), and the base (1) is provided with a guide rail (10.3) for guiding the sliding block (10.2).

3. The current collector according to claim 2, wherein the driving mechanism further comprises a flexible shaft, one end of the flexible shaft extends to a passenger compartment, and the other end of the flexible shaft is connected to the sliding block (10.2) in a transmission manner through the electric push rod (10.1).

4. The current collector according to claim 2, wherein the flexible shaft comprises a shaft core (11.2) and a steel wire tube (11.1) sleeved on the shaft core (11.2).
